(19) Europäisches Patentamt European Patent Office Office européen des brevets

(11) **EP 4 635 779 A1**

(12) **EUROPEAN PATENT APPLICATION**

(43) Date of publication:
**22.10.2025 Bulletin 2025/43**

(21) Application number: **24170545.8**

(22) Date of filing: **16.04.2024**

(51) International Patent Classification (IPC):
**B60L 13/03** (2006.01)     **B60L 15/00** (2006.01)
**B61B 13/08** (2006.01)     **B65G 54/02** (2006.01)
**H02K 41/03** (2006.01)     **H02P 25/06** (2016.01)

(52) Cooperative Patent Classification (CPC):
**B60L 13/03; B60L 13/04; B60L 15/005;
B65G 43/00; B65G 54/02; H02K 41/03;
H02K 41/031; H02P 25/06;** B60L 2200/26;
B65G 2203/0283; B65G 2203/0291

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **ABB Schweiz AG
5400 Baden (CH)**

(72) Inventors:
• **Haudum, Martin
4020 Linz (AT)**
• **Steinhauser, Armin
4040 Linz (AT)**
• **Hauer, Michael
4810 Gschwandt (AT)**
• **Flixeder, Stefan
4840 Vöcklabruck (AT)**

(74) Representative: **Patentanwälte Pinter & Weiss OG
Prinz-Eugen-Straße 70
1040 Wien (AT)**

(54) **SUSTAINABLE MOVEMENT PLANNING FOR AN ELECTROMAGNETIC TRANSPORT SYSTEM**

(57)     In order to provide a method for sustainably operating an electromagnetic transport system (1) to move at least one mover (3), a first maximum value (amax1, vmax1) of a first trajectory (t1) for at least one movement quantity (x, v, a) of the mover (3) is determined, a second maximum value (amax2, vmax2) of a second trajectory (t2) for said at least one movement quantity (x, v, a) of the mover (3) is determined, the first trajectory (t1) is selected as a target trajectory (t*), if the first maximum value (amax1, vmax1) is equal to or smaller than the second maximum value (amax2, vmax2), the second trajectory (t2) is selected as a target trajectory (t*), if the second maximum value (amax2, vmax2) is smaller than the first maximum value (amax1, vmax1), and the mover (3) is moved in accordance with said target trajectory (t*).

Fig. 4b

EP 4 635 779 A1

**Description**

The present invention relates to a method for operating an electromagnetic transport system having a stator along which at least one mover is moved, and to an electromagnetic transport system, particularly to a long stator linear motor or to a planar motor.

In modern transportation systems, it is oftentimes necessary to move transport units, i.e. parts, components, other goods, etc., over transport distances between spatially distant stations, e.g., processing stations or production stations or service stations. Various transport systems are known for this purpose. In the recent past, however, especially electromagnetic transport systems have been used to that end, such as long stator linear motors (LLM) and planar motors (PM). In particular, LLMs and PMs are employed to meet high requirements regarding flexibility and efficiency that are typically posed to modern transportation systems. In LLMs and PMs, goods to be transported are picked up and moved by a potentially large number of movers. Planning and coordinating the movements of a potentially large number of movers is an essential and oftentimes complex task, which needs to be attended to with great care when operating an LLM or PM.

LLMs, their applications and their mode of operation are well known from the state of the art. LLMs generally consist of a stator (also referred to as a "long stator linear motor stator" or "LLM stator") and at least one mover (also referred to as a "shuttle" or "transport unit"), which is used to transport a component or other goods. As described in US 6,876,107 B2, an LLM stator is usually composed of a plurality of stator segments, whereby a plurality of drive coils (also referred to as "LLM coils") are arranged in a fixed position next to one another on the stator or on the stator segments. The stator segments can have different geometries, such as straight lines, curves, switches, and can be assembled into a desired LLM stator by stringing them together. The LLM stator forms a set of at least one path along which a transport unit or several transport units can be moved. The transport units are held and guided along the stator.

PMs are known from the prior art as well. For example, US 9,202,719 B2 discloses the basic structure and basic mode of operation of a PM. As an LLM, a PM also comprises a stator, which, in contrast to LLMs, forms a transport plane in which one or more transport units can be moved in at least two dimensions. In a PM, drive coils are usually arranged in the transport plane, in some designs also in several planes stacked above or below one another.

In order to bring about a controlled movement of a mover for transporting a part or a good or a component, in an PM or LLM, drive magnets (permanent magnets or electromagnets) are provided on the movers, and position sensors (AMR sensors, Hall elements, etc.) are provided on the stator, in addition to the drive coils installed on the stator. By controlling the drive coils, a moving magnetic field ("magnetic drive field") can be generated, which interacts with the drive magnets of the movers to move the movers. In a known manner, the drive coils are controlled in particular by means of control units provided for this purpose, which output firing pulses to semiconductor switches, such as, in particular, IGBT modules, in order to apply corresponding coil voltages to the drive coils to generate drive currents in the coils to generate said magnetic drive field, eventually. Drive coils that are controlled and therefore energized for the purpose of generating a magnetic drive field are referred to as "active" drive coils. In order to move a mover along a stator, some of the drive coils are active drive coils, whereby normally de-energized drive coils become active drive coils and active drive coils become de-energized drive coils. A mover can thus be moved in the direction of a moving magnetic drive field.

Further explanations of LLMs, PMs as well as a large number of design options for LLMs and PMs can be found in WO 2013/143783 A1, WO 98/50760 A2, US 6,876,107 B2, US 2013/0074724 A1, WO 2004/103792 A1 or EP 1 270 311 B1, among other literature, so that no further implementation details of these drive forms will be discussed here.

As mentioned at the outset, the planning of appropriate trajectories for moving movers in an LLM or PM system constitutes a crucial task when designing operating strategies for LLM or PM systems. In the important case of a plurality of movers being present, the coordination of a potentially large number of trajectories is particularly crucial, e.g., to avoid collisions, to save energy, to reduce wear, etc. Previous approaches with regards to movement planning of movers in LLM or PM systems, such as EP 3 868 005 B1, for instance, primarily focus on the goal of optimizing throughput. Therefore, movers are usually moved with maximum acceleration and hence maximum speed whenever this is possible, even if this means that movers may have to wait in a traffic jam in front of a targeted processing station. By following this regime, in many cases energy is wasted in acceleration and braking intervals, eventually creating traffic jams, which, for obvious reasons, detrimentally affect metrics such as energy balance, sustainability, longevity of components etc.

Against this background, it is an object of the present invention to provide a method for operating an electromagnetic transport system in a more sustainable fashion.

This object, for the electromagnetic transport system and the method mentioned at the outset, is achieved in that, at a pre-described planning time point, a first maximum value of a first trajectory for at least one movement quantity of the mover is determined, the first trajectory being configured to move the mover from a starting position at a starting time point to a target position at a target time point, in that a second maximum value of a second trajectory for said at least one movement quantity of the mover is determined, the second trajectory being configured to move the mover from said starting position at said starting time point to said target position at said target time point, in that the first trajectory is selected as a target trajectory, if the first maximum value is equal to or smaller than the second maximum value, in that the second trajectory is selected as a target trajectory, if the second maximum value is smaller than the first maximum value, and in that, starting at said starting time point, the mover is moved in accordance with said target trajectory.

In a preferred fashion, the at least one movement quantity may correspond to a mover speed and the first maximum value and the second maximum value may hence correspond to a maximum speed, or the at least one movement quantity may correspond to a mover acceleration, and the first maximum value and the second maximum value may hence correspond to a maximum acceleration, or the at least one movement quantity may correspond to a mover jerk and the first maximum value and the second maximum value may correspond to a maximum jerk, or the at least one movement quantity may correspond to another physical quantity associated with the mover, which another physical quantity allows to plan a movement of the mover. As is well known from literature, a trajectory corresponds to a time-profile of a physical quantity. In the cases described above, said trajectories thus correspond to time-profiles of a mover speed, or of a mover acceleration, or of a mover jerk, respectively, leading to a time profile of a mover position that connects the starting position with the target position.

By operating an electromagnetic transport system according to the strategy outlined above, the invention allows for a series of advantages, such as reduced energy consumption, reduced wear, reduced thermal load and simple application (no or only simplified manual optimization are necessary), primarily due to the fact that by selecting a target trajectory from a set of trajectories, i.e., at least two trajectories, whose respective maximum value is smallest, automatically the trajectory best serving these advantages is chosen. It is to be mentioned that different approaches may be used for finding said maximum values. For instance, in a simple and effective approach, the largest positive value of a trajectory may be searched and used as a maximum value. However, also a largest absolute value of a trajectory may be used as a maximum value, or a largest squared value of all values encompassed by a trajectory may be used as a maximum value, or another norm, like the L1-norm or L2-norm or another norm may be applied to the trajectory before determining the maximum value.

Within the scope of the invention, said trajectories may be computed and planned out in entirety before evaluating the trajectories by determining a maximum value. Planning the trajectories essentially requires to determine a time-profile for the respective movement quantity, which results in a position time profile connecting the starting position and the target position.

For this planning step (also referred to as "path planning" in literature), a series of planning methods known from literature may be employed, as described, e.g., in Karur, K.; Sharma, N.; Dharmatti, C.; Siegel, J.E. A Survey of Path Planning Algorithms for Mobile Robots. Vehicles 2021, 3, 448-468. https://doi.org/10.3390/vehi cles3030027, or in other scientific publications, such as Gasparetto, Alessandro, et al. "Path planning and trajectory planning algorithms: A general overview." Motion and Operation Planning of Robotic Systems: Background and Practical Approaches (2015): 3-27. After the trajectories have been planned, said respective maximum values may be computed and the method according to the invention may be carried out. Within the scope of the invention, it may of course also be provided to consider a number of trajectories larger than just two trajectories and select the best fitting trajectory from such a larger set of trajectories, e.g., from a set of thousands of trajectories.

However, as will be explained later, there are also attempts within the teaching of the invention that allow to determine said maximum values associated with said trajectories and thus to decide about which trajectory to move forward with without elaborating the trajectories themselves in entirety and in detail beforehand, allowing for a simplification of the method according to the invention. In fact, it is already sufficient to only have access to said maximum values which are compared to one another. As will be explained later, there are methods that allow to determine such maximum values without specifically computing the trajectories themselves, for instance by stopping a planning routine as soon as a limit value of the movement quantity is reached. However, the trajectories may also be planned out before comparing said maximum values and hence before making a decision on which trajectory to be used as target trajectory. In case the trajectories are not planned and thus known a priori, at least the one trajectory selected as target trajectory has to be computed at some, potentially later, time point, in order to be able to follow this trajectory when moving the mover in accordance with the target trajectory. In case at least one limitation value is provided to limit the at least one movement quantity, this at least one limitation value may of course be taken into account during such a planning process for planning the first trajectory and / or second trajectory and / or target trajectory considered when selecting the target trajectory. As mentioned above, only planning the target trajectory allows to reduce computational cost and computational complexity.

In various important practical applications, it is not just one limitation value that is provided for limiting the movement of a mover, but a series of limitation values, allowing for different limitations for different movement quantities, limitations hence being adapted to different spatial sections of a stator or a track or a path on which a mover is moved, for instance. In such a scenario, where a second limitation value different from the at least one limitation value is provided for a spatial section between the starting position to the target position to replace or adapt or modify the at least one limitation value in said spatial section, the second limitation value may be obeyed and hence used for planning the first trajectory and / or second trajectory and / or target trajectory as well.

In another preferred embodiment, it may further be provided that the planning time point is selected as a time point before a movement of the mover begins, i.e., offline, before operation, or that the planning time point is selected as a time point during operation of the electromagnetic transport device, such that the target trajectory is selected while the mover is moved, i.e., online, during operation. This variation allows for an adaption of the invention to the different scenarios, e.g., where online optimization cannot be carried out, or to scenarios, where it is known a priori that an update of the trajectory the mover travels on will be necessary.

In both cases, i.e., in case the target trajectory is selected offline, but also in case the target trajectory is selected online, a second planning time point after said planning time point may be provided during operation of the electromagnetic transport device, and at said second planning time point, a further first maximum value of a further first trajectory for the at least one movement quantity of the mover may be determined, the further first trajectory describing a movement of the mover from a further starting position at a starting time point to a further target position at a further target time point, thus allowing a further planning during operation, i.e., online. In this embodiment, following on from the concept of the invention, a further second maximum value of a second trajectory for said at least one movement quantity of the mover may be determined, the further second trajectory describing a second movement to move the mover from said further starting position at said further starting time point to said further target position at said further target time point, further first trajectory may be selected as a further target trajectory, if the further first maximum value is equal to or smaller than the second maximum value, or the further second trajectory may be selected as a further target trajectory, in case the second maximum value is smaller than the first maximum value. After selecting an appropriate target trajectory, and, starting at said further starting time point, the mover may further be moved in accordance with said further target trajectory. In this fashion, the advantages of offline and online optimization can be combined.

Preferably, as is the case in many practical applications in modern mechatronics when aiming at a best possible solution, an optimization method may be used for selecting a trajectory as target trajectory, the optimization method determining a plurality of maximum values, each associated with a respective trajectory for said at least one movement quantity of the mover, and selecting the trajectory associated with the smallest maximum value. Such an optimization method may preferably be selected from a group comprising methods of pareto-optimization, methods of linear programming, methods of nonlinear optimization, methods based on artificial-intelligence or methods based on neural networks, allowing to chose an algorithm fitting the requirements of a specific scenario.

At said target position, e.g., a processing station may be provided, where goods transported by movers of the electromagnetic transport device are processed, i.e., treated or modified or exchanged or assembled with other components etc. Within the scope of the invention, a so-called workload parameter of such a processing station may be taken into account for planning at least one of the trajectories considered when selecting the target trajectory, the workload parameter describing a state of the processing station, hence allowing to take into account situations present at such processing stations, which allows to realize a series of further advantages. E.g., it thus becomes possible to drive a mover more slowly towards a processing station in case it is known that there is already a traffic jam in front of the processing station, made up of other movers that attempt to access the processing station as well etc.

Further, in a series of relevant practical applications, a multiple of movers may be present in an electromagnetic transport system. In such a case, where more than one mover is present and where hence at least one further mover is moved towards the target position, at least one value of a further movement quantity associated with the at least one further mover may be taken into account for planning the trajectories considered when selecting the target trajectory. Specifically, by considering the positions of the movers present in the transport system, the first trajectory and second trajectory and hence the target trajectory may be planned such that a pre-described buffer-distance, i.e., a safety distance, between the mover and the at least on further mover is secured during operation of the electromagnetic transport device, to ensure that no collisions between consecutive movers occur. In a preferred fashion, said buffer distance may correspond to at least a longitudinal extension of a mover moved in the electromagnetic transport system, i.e., e.g., its length in movement direction, or to a multiple of a longitudinal extension of a mover moved in the electromagnetic transport system, e.g., two times or three times or four times the longitudinal extension of a mover moved in the electromagnetic transport system.

Further, also a traffic parameter representing a traffic situation in the electromagnetic transport device may be taken into account for planning the trajectories considered for selecting the target trajectory and hence for moving a mover. Such a traffic parameter may be representative of several important metrics affecting the movement of movers in said electromagnetic transport device, e.g., of an average speed of the movers moved in the electromagnetic transport device, or of an average distance between neighboring movers moved in the electromagnetic transport device, or of a minimum speed assumed by a mover moved in the electromagnetic transport device in a pre-described traffic-observation time interval.

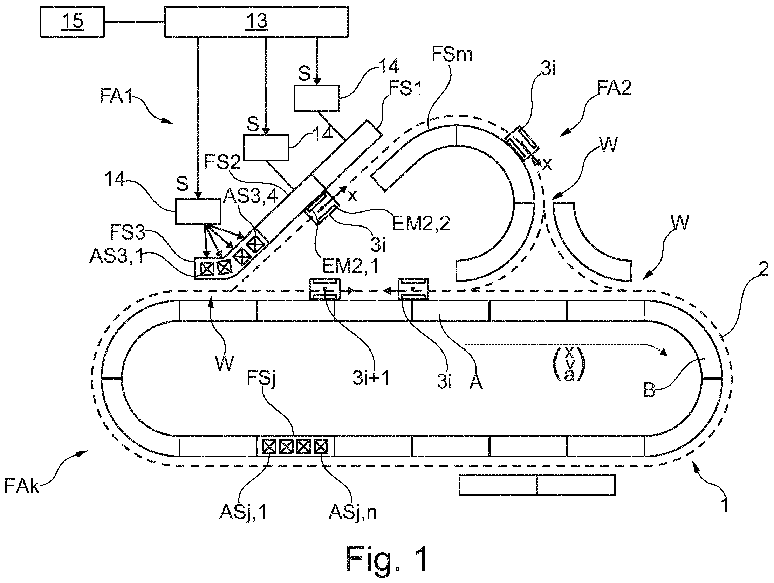

The present invention is described in greater detail below with reference to Figs.1 to 7, which show schematic and non-limiting advantageous embodiments of the invention by way of example. The specific examples described herein are only used to explain the content of the present invention and are not intended to limit the present embodiment. The following are shown:

Fig.1 an embodiment of a stator in the form of a long stator linear motor,

Fig.2a, 2b different views of a possible embodiment of a planar motor,

Fig.3 a speed-profile of a mover,

Figs.4a-c a position-profile, a speed-profile, and an acceleration-profile of a mover obtained by means of the invention,

Fig.5 a stator with an override-segment,

Fig.6 a stator with a traffic jam and an elasticity interval,

Fig.7a-b stator segments with different embodiments of buffer zones,

As mentioned at the outset, the present invention may in particular be used to operate electromagnetic transport devices 1 in the form of long stator linear motors or planar motors. Before providing a detailed explanation of the invention, these motor types are thus discussed briefly.

Fig.1 shows an example of an arbitrary structure of a long stator linear motor (LLM) 1 comprising a stator 2 and plurality of movers 3i, $i \in \mathbb{N}$. The movers 3i can be moved along the stator 2. The stator 2 is essentially defined by the stationary long stator 2 of the LLM 1. In the exemplary embodiment shown, a number of stator segments FSj, $j \in \mathbb{N}$ are provided, defining a path for the movers 3i. The stator segments FSj are arranged on a suitable construction. Each stator section FAk comprises at least one stator segment FSj, normally several stator segments FSj. Individual stator sections Fak may partially overlap along the stator 2 in a movement direction x on different sides of a mover 3i, especially at switching locations W of the stator 2 at which a transition from a first stator section FAk on one side to another stator section FAk on another side of a mover 3i (such as from the stator section FA1 to the stator section FA2) can take place.

Each stator segment FSj comprises a number n of drive coils ASj,n, $j \in \mathbb{N}, n \in \mathbb{N}$, arranged next to one another in movement direction x, wherein the number n does not have to be the same for each stator segment FSj. In Fig. 1, for the sake of clarity, only drive coils ASj,n of some stator segments FSj are shown. Each mover 3i comprises a number m of excitation magnets EMi,m, $i \in \mathbb{N}, m \in \mathbb{N}$ (permanent magnets or electro-magnets), preferably on both sides of the mover 3i. The drive coils ASj,n generate a moving magnetic field and interact in the operation of the LLM 1 in a known manner according to the electric motoring principle with said excitation magnets EMi,m of the movers 3i in the magnetic field of the drive coils ASj,n. If the drive coils ASj,n are energized in the area of a mover 3i with a coil current by applying a coil voltage to the coil, a magnetic flux is produced, which, in cooperation with the excitation magnets EMi,m, causes a force on the mover 3i. Depending on the coil current, this force can comprise, as is well-known from the prior art, a propulsion or driving force component to move a mover 3i in a desired direction and/or a lateral force-forming force component to hold the mover 3i on the stator 2. The propulsion force component essentially serves for the movement of the mover 3i in a movement direction and the lateral force component can be used to guide the mover 3i, but also to steer the mover 3i in case that is necessary. In this way, each mover 3i can be moved individually and independently along the stator 2 by supplying the drive coils ASj,n in the region of each mover 3i with a corresponding coil current in accordance with the movement to be carried out.

In the case shown, a movement from a first position A to a second position B may be desired. The positions A and B may be the locations of, e.g., processing stations, at which the movers 3i may be loaded with goods to be transported, or goods transported by the movers 3i may be treated or exchanged etc, such as bottles that are filled with liquids etc. As will be discussed in detail in the following, the planning of trajectories for moving a mover 3i from A to B or vice versa is of utmost importance when it comes to laying out operating strategies for an electromagnetic transport system like the LLM 1 presently discussed. To describe the movement of mover 3i in an LLM 1, but also in a PM 1, movement quantities such as position x, speed v, and acceleration a are used hereafter. These movement quantities x, v, a or a selection of these movement quantities x, v, a may be represented by a vector, as indicated in Fig.1, but also other representations and also other movement quantities x, v, a are conceivable.

In order to control the movement of individual movers 3i, a mover control unit 13 (hardware and/or software, e.g., FPGA, microcontroller etc.) is provided in which setpoint values S for the movement of the movers 3i are generated or determined. The setpoint values S may comprise desired speeds or desired accelerations or desired jerks that are to be implemented in the course of moving a mover 3i. The setpoint variables S may thus prescribe set point values for said movement quantities x, v, a, that are decoded in a trajectory for moving a mover 3i from a position A to a position B. Of course, it is equally possible to provide a plurality of mover control units 13, which are each assigned to a part of the stator 2, e.g. a stator section FAk, and which control the movement of the movers 3i in this part only, by appropriately supplying the drive coils ASj,n. In addition, also segment control units 14 (hardware and/or software) can be provided, which are assigned to a stator segment FSj (or to several stator segments FSj or also to a part of a stator segment FSj) and which convert setpoint specifications from an associated mover control unit 13 for a mover 3i into coil currents for an associated drive coil ASj,n.

When moving a plurality of movers 3i, it is to be ensured in the stator control unit 15 or the mover control unit 13 that no inadmissible states occur on the stator 2. This primarily comprises the avoidance of collisions between two or more movers 3i, especially when more than one mover 3i is to be moved from location or processing station A to location or processing station B. The present invention may specifically be employed for this purpose, as will be discussed in detail later. As the basic operation principle of a LLM is well known, further details will not be discussed at this point.

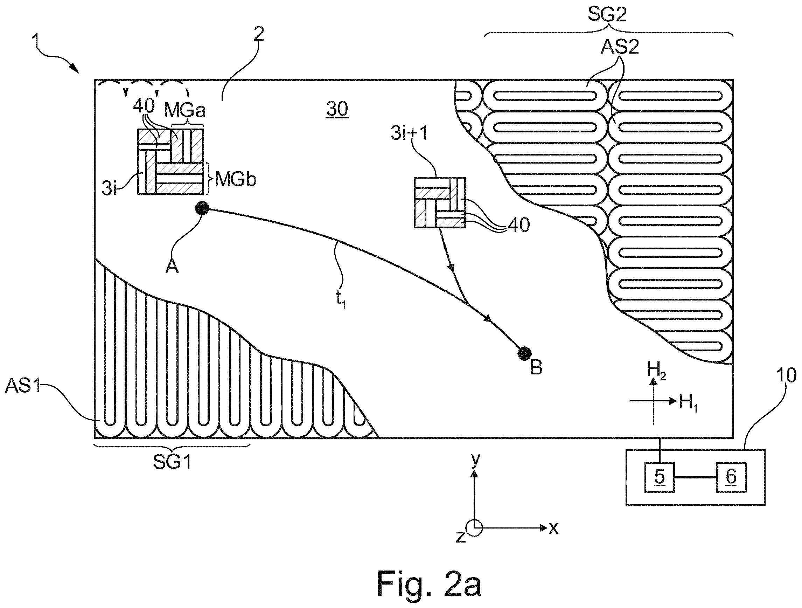

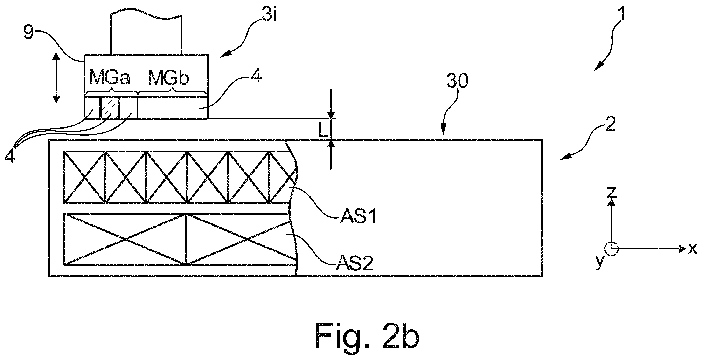

Figs. 2a and 2b further show a simplified exemplary embodiment of an electromagnetic transport device 1 in the form of a planar motor (PM) 1. Specifically, Fig. 2a presents a PM 1 in a partially broken-away plan view, and Fig. 2b shows the PM 1 in a partially broken-away side view. In the case of a PM 1, the stator 2 takes on the form of at least one movement plane 30. At least one mover 3i is movable along the movement plane 30 at least two-dimensionally in two main movement directions H1, H2. In the case shown, two exemplary movers 3i, 3i+1 are depicted, which are both headed for a target position B. Again, also in the case of a PM 1, a starting position A and a target position B may be the positions of processing stations, at which goods transported by the planar movers 3i are treated / loaded / modified / processed etc.

The movement plane 30 can be oriented in space in any way. For the sake of simplicity, only one transport segment is shown in Fig. 2a. Of course, a plurality of transport segments (which can be different) could be arranged next to one another in order to form the stator 2 and a larger movement plane 30. As a result, the transport device 1 can have a modular design, and movement planes 30 of different shapes and sizes can be realized, connecting processing stations and thus starting positions A and target positions B in all variations. Of course, this modular design is only optional, and it is also possible to provide only a single transport segment in the form of a single assembly. As mentioned before, in the movement plane 30 of the transport segment, also several movers 3i can be moved simultaneously and independently of one another.

In the specific case of the PM 1 shown presently, a first coil group SG1 with several drive coils AS1, which defines the first main movement direction H1, and a second coil group SG2 with several drive coils AS2, which defines the second main movement direction H2, are arranged on the transport segment 20. In general, the drive coils are designated by ASi, where "i" again is an index, in order to be able to distinguish the drive coils if necessary. The drive coils AS1 of the first coil group SG1 are arranged next to each other in a specific direction - in this case, in the X-direction of a Cartesian coordinate system - in order to form the first main movement direction H1 for the movement of the mover 3i, which in this case extends along the X-axis. The drive coils AS2 of the second coil group SG2 are arranged next to each other in a specific direction - in this case, the Y-direction of a Cartesian coordinate system - in order to form a second main movement direction H2 for the mover 3i, which in this case extends along the Y-axis. The drive coils AS1, AS2 of the first and second coil groups SG1, SG2, as shown in Fig. 2a, are preferably arranged relative to one another such that the two main movement directions H1, H2 are orthogonal to one another.

As in the LLM case discussed by means of Fig.1, several drive magnets 4 are arranged on the at least one mover 3i, which interact electromagnetically with drive coils AS1, AS2 of at least one of the two coil groups SG1, SG2 in the region of the mover 3i for moving the mover 3i. For this purpose, the mover 3i generally has a main body 9, on the underside of which (facing the movement plane 30) the drive magnets 4 are arranged, as can be seen in Fig. 2b. In Fig. 2a, the main body 9 is shown largely broken away to be able to see the arrangement of the drive magnets 4. As indicated in Fig. 2b, the drive magnets 4 are arranged in several magnet groups MGa, MGb. The drive magnets 4 are usually arranged with alternating polarity, as indicated in Fig. 2b. The drive magnets 4 can also be oriented differently in the different magnet groups MGa, MGb. With the PM 1 shown, a substantially unrestricted movement of a mover 3i in the two main movement directions H1, H2 would be possible, for example, in the movement plane 30 of the transport segment 20. It could in this case be possible to move the mover 3i, for example, only along the X-axis or only along the Y-axis. The mover 3i can be moved simultaneously in both main movement directions H1, H2, e.g., along a two-dimensional movement path BPn lying in the movement plane 30 with an X-coordinate and a Y-coordinate, as indicated on the mover 3i in Fig. 2a. As the basic operation principle of a PM 1 is well known as well, further details are spared at this point.

As mentioned at the outset, the planning of appropriate movements and trajectories of movers 3i to be moved in an LLM 1 or PM 1, e.g., to move a mover 3i from position A to position B, constitutes a crucial task when designing operating strategies for LLMs 1 as well as for PMs 1. Previous approaches with regards to movement planning of movers in LLM or PM systems primarily focused on driving with maximum accelerations and/or decelerations and/or maximum speeds, only aiming at the goal of optimizing throughput. This strategy in many cases turns out to be energetically inefficient, and oftentimes even increases the risk of collisions, thus being unsustainable.

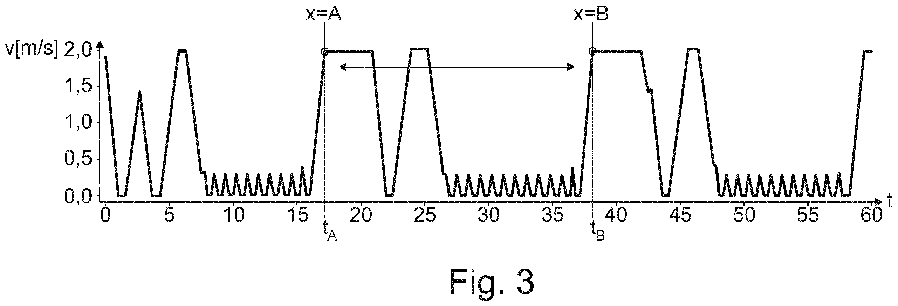

The effect of such unsustainable movement planning is depicted in Fig.3, where a time profile of a speed signal of a mover 3i moved in an LLM 1 is shown, the mover 3i being moved from a starting position A to a target position B, while interacting with a series of other movers 3i+1, 3i+2, 3i-1, .... The encounters with other movers 3i+1 create a need for a series of acceleration and braking processes, in particular to avoid collisions and to keep a minimum buffer distance, which, for obvious reasons, is detrimental for a series of components involved in the transport system, such as the coils, brakes, stator 2 etc. The frequent accelerations and brakings consume a lot of energy, which is converted into dissipation heat and thus cannot be recovered.

To overcome these problems, for an LLM 1 or a PM 1 or a general electromagnetic transport system 1 with a stator 2 along which at least one mover 3 is moved, e.g., a maglev, it is, according to the invention, provided to, at a pre-described planning time point tP, determine a first maximum value amax1, vmax1 of a first trajectory t1 for at least one movement quantity x, v, a of the mover 3, the first trajectory t1 being configured to move the mover 3 from a starting position A at a starting time point tA to a target position B at a target time point tB, further to determine a second maximum value amax2, vmax2 of a second trajectory t2 for said at least one movement quantity x, v, a of the mover 3, the second trajectory t2 being configured to move the mover 3 from said starting position A at said starting time point tA to said target position B at said target time point tB as well, and then to make a selection between those trajectories, i.e., to select the first trajectory t1 as a target trajectory t*, if the first maximum value amax1, vmax1 is equal to or smaller than the second maximum value amax2, vmax2, or to select the second trajectory t2 as a target trajectory t*, if the second maximum value amax2, vmax2 is smaller than the first maximum value amax1, vmax1. After the selection process, starting at said starting time point tA, the mover 3i is moved in accordance with the target trajectory t*, heading for the target position B. The trajectories t1, t2, t* describe time profiles of set point values of the aforementioned movement quantities x, v, a, and may be converted into appropriate setpoint variables S, which are implemented by the control units mentioned above. Said time points, i.e., the planning time point tP, the starting time point tA and the target time point tB, but also the starting position A and the target position B may be selected by an operator operating the electromagnetic transport system 1, or they may be prescribed by operating strategy stored in a control unit 13 of electromagnetic transport system 1, or they may be provided in another fashion. Depending on the specifics of an application of the invention, the skilled person will select a suitable method to provide these parameters.

In this way, the invention allows for a series of advantages, such as reduced energy consumption, reduced wear, reduced balancer load, reduced (stationary) thermal load and simple application (no or simplified manual optimization), due to the fact that from a set of trajectories, i.e., at least two trajectories, specifically the trajectory best serving these advantages is chosen. Within the scope of the invention, said trajectories may be computed and planned out in entirety before evaluating the trajectories by determining a maximum value. However, there are also attempts that allow to determine said maximum values associated with said trajectories and thus a decision about which trajectory to move forward with without elaborating the trajectories in detail, e.g., by stopping to plan a trajectory as soon as a limit value is reached. Within the scope of the invention, it may of course also be provided to consider a larger number of trajectories than just two trajectories and select the best fitting trajectory from such a larger set. The at least one movement quantity may correspond to a mover speed v or to a mover acceleration a, or to another physical quantity associated with the mover that may be employed to plan a movement.

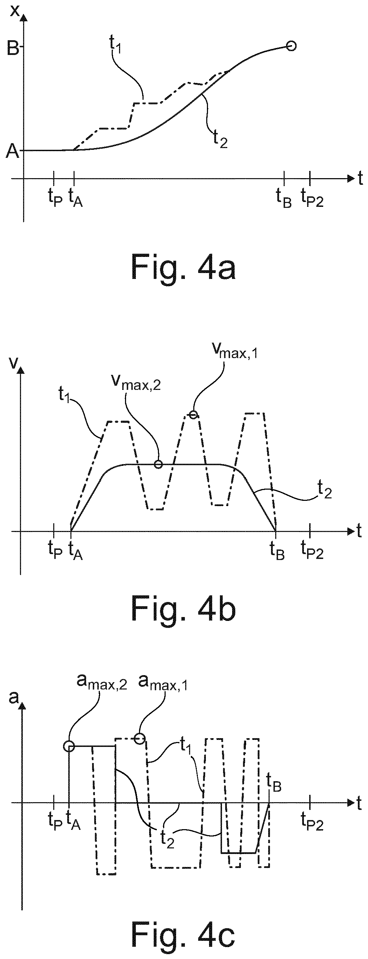

Two exemplary trajectories t1, t2, that can be considered during the procedure outlined above are shown in Fig.4. The first trajectory t1 may, e.g., be given a priori, as a specification provided by an operator. Already by simple visual inspection, it becomes apparent that the second trajectory t2 provides for more sustainability, as a smaller number of accelerations and braking processes have to be carried out. In this regard, it was found that particularly the maximum speed vmax, or the maximum acceleration amax or the maximum jerk realized during a movement can be regarded as a metric for sustainability. Also combinations of these metrics are of course conceivable. If it is achieved to keep constant the duration it takes to move a mover 3i from a starting position A to a target position B, while reducing the maximum speed in this process, in many practically relevant cases, less energy is consumed, less wear is caused, and in general, a more sustainable movement is achieved. To that end, the invention at its core aims at reducing maximum values, as outlined above, in particular maximum speed and/or maximum acceleration and/or maximum jerk, while keeping the durations of movements the same, thus leading to smoother movements that benefit the mover 3i, the LLM 1 or PM1, but also the goods to be transported. Further, it can also be seen from Fig.4c that also a smaller number of acceleration changes is needed in the "sustainable" trajectory t2, which may be regarded as another sustainability metric. If it turns out not to be feasible to find a second trajectory with smaller maximum speed vmax that still transports a mover in the same time, the first trajectory may still be used to guide the mover 3i anyway.

In the scenario shown in Fig.4, the planning time point tP is selected as a time point before operation of the electromagnetic transport device 1 is started, the target trajectory t* thus being selected before a movement of the mover 3 begins. As can be seen, the speed v(tP) assumed at the planning time point tP is zero. However, the planning time point tP may as well be selected as a time point during operation of the electromagnetic transport device 1, the target trajectory t* thus being selected when the mover 3 is already in movement. This means that within the scope of the invention, both an online as well as an offline selection can be implemented.

Moreover, also a combination of offline and online optimization can be carried out, or a replanning or re-selection of a target trajectory t*, in case at least one online planning has already taken place. To that end, as also indicated in Fig.4, a second planning time point tP2 after said planning time point tP may be provided during operation of the electromagnetic transport device 1. At said second planning time point tP2, a further first maximum value amax1, vmax1 of a further first trajectory t1 for the at least one movement quantity x, v, a of the mover 3 may be determined, the further first trajectory t1 describing a movement of the mover 3 from a further starting position A at a starting time point tA to a further target position B at a further target time point tB, and a further second maximum value amax2, vmax2 of a second trajectory t2 for said at least one movement quantity x, v, a of the mover 3 may be determined, the further second trajectory t2 describing a second movement to move the mover 3 from said further starting position A at said further starting time point tA to said further target position B at said further target time point tB. The selection step according to the invention may then be repeated, in that the further first trajectory t1 may be selected as a further target trajectory t*, if the further first maximum value amax1, vmax1 is equal to or smaller than the second maximum value amax2, vmax2, or in that the further second trajectory t2 is selected as a further target trajectory t*, if the second maximum value amax2, vmax2 is smaller than the first maximum value amax1, vmax1. Eventually, starting at said further starting time point tA, the mover 3 may be moved in accordance with the further target trajectory t*. It is to be mentioned that the second planning time point tP2 may as well be selected as a time point between the first starting time point tA and the first target time point tB, such that a re-selection of a target trajectory t* can be carried out even before a previously pre-described target position tB is reached. Such an approach is particularly useful in case a new obstacle arises, or an unexpected movement of a further mover 3i+1 takes place that requires an appropriate reaction etc.

Typically, in motion and movement planning, limitation values need to obeyed. Depending on a body, in this case mover 3i, to be moved, but also depending on the structure of a stator 2, oftentimes a maximum speed value vlim has to be obeyed, in order to avoid damages or other undesired effects. In most practically relevant cases, also limits for acceleration and jerk need to be considered.

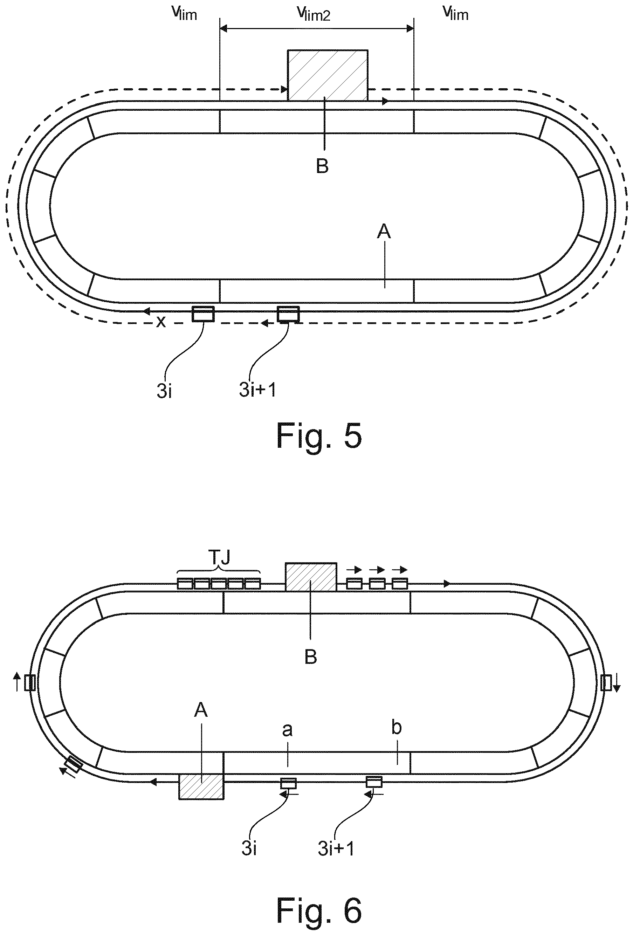

In control or software concepts implemented in a control unit 13 to control an LLM 1 or a PM 1 in order to move a mover 3i, a well-known option is to provide maximum speed limits vlim and/or maximum acceleration limits alim defined for specific mover types. Depending on the specifics of a particular mover 3i, such as its constructive parameters, its weight, its load, etc., it may be necessary to restrict the allowable speed and/or the allowable acceleration and/or the maximum allowable jerk. In this regard, it is also possible to define local speed and acceleration limits, that may be lower or higher than global limits for certain spatial areas. Such an area, where a second speed limit vlim2 smaller than a first, global speed limit vlim, is provided, is shown in Fig.5. The idea behind Fig.5 is to limit the allowable speed in the area of a processing station at location B to a smaller value, in order to act particularly carefully in the area of this processing station. Such smaller values are hereafter referred to as "override parameters".

Especially when commissioning an LLM 1 or a PM 1, or if problems occur during operation, it may be desirable not to apply a maximum speed, but to be careful at first, and to first test whether everything is working properly at reduced speed and/or at a reduced acceleration.

Such limitations can of course also be incorporated into the invention. Specifically, to that end, at least one limitation value vlim, alim may be provided to limit the at least one movement quantity x, v, a, which at least one limitation value vlim, alim may of course also be taken into account in the planning of the second trajectory t2 and/or when planning the first trajectory t1, i.e., the trajectories considered in the selection process according to the invention. This aspect is likely to gain increased importance with regard to adaptive LLMs or PMs 1, if different products (masses) are moved, where it is only found during operation that a smaller limit should be applied.

In case of the override functionality described previously, a second limitation value vlim2, alim2 different from the at least one limitation value xlim, vlim, alim may be provided for a spatial section between the starting position A to the target position B to replace the at least one limitation value xlim, vlim, alim in said spatial section, which second limitation value xlim2, vlim2, alim2 may of course also be used for planning the second trajectory t2 and or the first trajectory t1. In electromagnetic transport systems as LLMs 1 or PMs 1, it is conceivable that such an override parameter is not only applied globally, but also only locally, in a certain section of the assembly only, as shown in Fig.5. Sensible movement limits depend not only on the distance to the next process station, but also on the geometry of the assembly and physical limits. In particular, it may not be possible to travel as fast in curves with fully loaded movers 3i as on straights or with an empty shuttle. In principle, it might be possible to drive as fast, but the energy required and the wear caused are out of all proportion and it is better to make up the time on straights. Consequently, in the case of an LLM, it is particularly beneficial to reduce said maximum values in the area of curves.

While a broad range of methods to plan trajectories are known in literature, in the context given, it turns out that especially optimization methods may be used for planning at least the second trajectory t2, the optimization method aiming at minimizing a target value J while keeping constant the target time tB to reach the target position B. When optimizing, the second maximum value amax2, vmax2, preferably a maximum speed or a maximum acceleration or a maximum jerk, or an arbitrary combination of those, may be used to formulate the objective J, or an electromagnetic energy $E_{em}$ spent while moving the mover 3 from the starting position A to the target position B may be used as a target value J or a number of acceleration sign changes may be used as a target value J or a combination of the aforementioned target values J may be used as a target value J. Among the great amount of optimization methods available, especially methods of linear programming, methods of nonlinear optimization have turned out to produce particularly good results. As will be explained further in the following, however, also other methods, such as methods of pareto-optimization, have proven to be capable of producing sound results.

It is to be mentioned that the aforementioned optimization methods may especially be combined with a-priori simulations, in order to plan said trajectories before an operation of an LLM or PM is actually started. In combination with Pareto optimization, it thus becomes possible to efficiently and automatically optimize the motion parameters in the sections between the process stations. For pareto optimization, the entire system made up by an LLM or PM may be simulated, potentially numerous times, in order to obtain, e.g., simulated for throughput times and/or numbers of movers in a process station etc. In the course of such simulations, the limitation parameters mentioned above, e.g., $v_{max}$, $a_{max}$, but also other parameters, e.g., tickets at process stations, numbers of movers in the system, may be varied, in order to find a setting of the varied parameters leading on optimal value. A target functional to be optimized may include values as said throughput, energy efficiency, duration of full acceleration/deceleration of the shuttles, number of movers, etc., or combinations thereof. The parameter combination that delivers the best result for the target functional is then selected.

The optimization-based approaches described so far typically depend on a number of assumptions made when setting up the optimization. Such assumptions may regard so-called workload parameters of processing stations, i.e., throughput times in processing stations, a number of movers 3i waiting in front of a processing station, energy consumption of a processing station, etc., but also travel distances to be covered by a mover 3i, numbers of movers 3i present in the LLM 1 or PM 1, etc. However, finding optimal parameters oftentimes is not trivial, so that it can be necessary to extend an optimization by additional heuristic approaches or further complex simulations or further theoretical considerations. If the boundary conditions change, however, e.g., because a process station is out of operation or because a different product is produced and thus the respective loads on the movers 3i change, a priori optimization may not lead to satisfactory results. In such cases, the concept according to the invention may be extended by automated adaptation during runtime.

To that end, it may be provided to adapt the target trajectory t* by modifying at least one set point value for the at least one movement quantity x, v, a while moving the mover 3i along the target trajectory t*. In the prior art, typically the shortest route between the current position and the target position is calculated, to move a mover 3i from a starting position A, where a first processing station may be located, to a target position B, where a second processing station may be provided. If such a path is suddenly blocked, however, which may happen due to a closed barrier, due to traffic jam, due to slow other participants, or due to broken other mover 3i, or due to an accident between other movers 3i, it may be better or even necessary to choose an alternative path, and therefore apply the adaptive replanning functionality laid out before. In principle, a decision to carry out an adaptive replanning process during operation can also be made at any intersection and could also be automated, or could be caused by an operator. Eventually, it is crucial that a mover 3i arrives at its prescribed destination.

If a mover 3i makes its way from one process station to the next, it is oftentimes possible to calculate the throughput of the second process station based on data about a past throughput of the second process station (nominal or actual throughput, e.g. in the last 5 minutes, or an average value of past throughput), or a distance between the two process stations. For example, the process stations could keep statistics on the PartsPerMinute (PPM) and inform shuttles when they are likely to be immediately processed in the process station, without having to wait any longer ("receiving a ticket"). If also other movers 3i are on the way or if other movers 3i are already waiting in front of the second process station, i.e., in front of the target position B, a traffic jam TJ may be caused, as is shown in Fig.6. In order to avoid unnecessary acceleration, which would only lead to a sooner arrival at the traffic jam TJ, such information can be incorporated into the planning process of the second trajectory, in order to reduce the movement parameters even further, because a later arrival at the traffic jam TJ will not increase the overall duration it takes to arrive at the processing station B, compared to a first trajectory that would rush to the end of the traffic jam TJ with high speed. Using such information allows to save energy even further, as well as to additionally reduce wear, while still ensuring that the mover 3i arrives at the desired time. Specifically, to incorporate, e.g., information on a traffic jam into an operating strategy according to the invention, a traffic parameter representing a traffic situation in the electromagnetic transport device 1 may be taken into account for planning the trajectories t1, t2 considered for selecting the target trajectory t* and hence for moving a mover 3i. Such a traffic parameter may be representative of an average speed of the movers 3i moved in the electromagnetic transport device, or of a number of movers waiting in front of a processing station, or of an average distance between neighboring movers moved in the electromagnetic transport device 1, or of a minimum speed assumed by a mover 3i moved in the electromagnetic transport device 1 in a pre-described traffic-observation time interval.

Simple path-time calculations can be used to determine these movement parameters, but big data methods can also be used. In other words, the system is taught which movement parameters are good for minimizing the waiting time of both the process station for a shuttle and a shuttle in front of the process station. Within the scope of the present considerations, big data methods are particularly considered to be based on long-term data collections and the use of large data sets being the result of such long-term collections. Specifically, long-term data collection and subsequent analysis can yield better estimates and predictions, e.g., on throughput, which might depend on other parts of the transport device, i.e., LLM or PM, on other transport devices, which might be periodic, or might depend on external parameters etc. All these potential sources for factors affecting throughput can be joined, their data collected and evaluated to derive estimates.

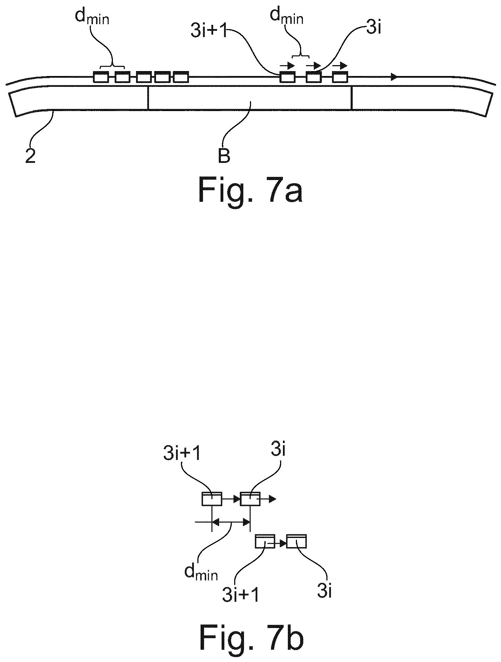

The appropriate selection and adaptation of the movement parameters x, v, a should preferably take place before starting a new movement of a mover 3i, as this makes it easier to handle also potentially large numbers of movers 3i. Typically, and as shown in Figs.7a-b, a multiple of movers 3i is present in an LLM or in a PM, such that different movers 3i may impact one another. Such counteractions should be considered when considering, evaluating or planning new trajectories, like said second trajectory t2. Within the scope of the present invention, it may thus be provided to take into account at least one value of a further movement quantity x2, v2, a2 of the at least one further mover 3i+1 for planning the first trajectory t1 or any other trajectories considered.

In case more than just one mover 3i is on the way to the target position B, where, e.g., a processing station may be located, and these more than one movers 3i are in queue in front of this processing station, it may be provided that the first trajectory t1 and second trajectory t2 are planned such that a pre-described buffer-distance dmin between the mover 3 and the at least on further mover is secured during the first trajectory t1 as well as the second trajectory t2. Keeping a minimum buffer distance particularly helps to avoid collisions between movers 3i.

In a preferred embodiment, in this context, it may be provided to modify said buffer-distance dmin depending on at least one value of a further movement quantity x2, v2, a2 of the at least one further mover 3i+1. This means that the buffer-distance dmin may be increased or decreased, depending on, e.g., the speeds of two movers 3i, 3i+1 that are separated by said buffer-distance dmin. Particularly, if the second mover 3i+1 is moving faster than the first mover 3i, i.e., such that the distance between the two movers 3i, 3i+1 decreases, an increase of the buffer-distance dmin may be reasonable. Besides avoiding collisions, the aim of this particularly beneficial embodiment is to reduce the number of start-up movements or oscillations within a stop-and-go traffic, and especially to avoid the so-called accordion effect, which is well-known from traffic planning in regular streets. Especially when one mover 3i follows another mover 3i, also reduced acceleration can be used, as the probability is high that a steep reduction of speed may be necessary, especially as one mover 3i might get (too) close to another mover 3i in front of the first mover.

Further, it also does not seem expedient to always move up immediately. In many cases, it may be better to define an elasticity interval (a, b), describing a distance between two consecutive movers. The movement of moving up then only starts when the mover 3i+1 has dropped out of this elasticity interval (a, b), as depicted in Fig.6, i.e., when the distance becomes greater than b. However, once a sufficient distance between said movers 3i has been achieve, it may be provided that this distance is not increased further. In this regard, so-called rear movers, i.e., movers 3i+1 following behind other movers 3i, may be moved by employing different acceleration profiles, in order to ensure a sufficient distance. For instance, an acceleration profile of a rear mover may be less steep and comprise smaller maximum acceleration values. Moreover, particularly when moving up a rear mover, i.e., bringing the rear mover closer to a further mover, the dynamics may be reduced, by employing smaller maximum values and driving more slowly.

Results similar to those obtainable with the elasticity interval can be achieved by connecting several buffers in series, i.e., creating a cascade of buffers. A last buffer in such a series, i.e., a buffer right in front of a process station preferably depends on the requirements of a targeted process station and may allow the shuttles to pass through individually. An upstream barrier, i.e., a barrier closer to a processing station, opens when the buffer level of the last barrier is low, but then lets several shuttles through at the same time so that the first buffer is full again. The same principle can of course also be applied iteratively to several barriers connected in series, similar to queues at an airport.

**Claims**

1. Method for operating an electromagnetic transport device (1) with a stator (2) along which at least one mover (3) is moved, **characterized in that,** at a pre-described planning time point (tP), a first maximum value (amax1, vmax1) of a first trajectory (t1) for at least one movement quantity (x, v, a) of the mover (3) is determined, the first trajectory (t1) being configured to move the mover (3) from a starting position (A) at a starting time point (tA) to a target position (B) at a target time point (tB), **in that** a second maximum value (amax2, vmax2) of a second trajectory (t2) for said at least one movement quantity (x, v, a) of the mover (3) is determined, the second trajectory (t2) being configured to move the mover (3) from said starting position (A) at said starting time point (tA) to said target position (B) at said target time point (tB), **in that** the first trajectory (t1) is selected as a target trajectory (t*), if the first maximum value (amax1, vmax1) is equal to or smaller than the second maximum value (amax2, vmax2), **in that** the second trajectory (t2) is selected as a target trajectory (t*), if the second maximum value (amax2, vmax2) is smaller than the first maximum value (amax1, vmax1), **and in that,** starting at said starting time point (tA), the mover (3) is moved in accordance with said target trajectory (t*).

2. Method according to claim 1, **characterized in that** the planning time point (tP) is selected as a time point before a movement of the mover (3) is started.

3. Method according to claim 1, **characterized in that** the planning time point (tP) is selected as a time point at which the mover (3) is moving.

4. Method according to claim 1, 2 or 3, **characterized in that** a second planning time point (tP2) at which the mover (3) is moving after said planning time point (tP) is provided, **in that**, at said second planning time point (tP2), a further first maximum value (amax1, vmax1) of a further first trajectory (t1) for the at least one movement quantity (x, v, a) of the mover (3) is determined, the further first trajectory (t1) describing a movement of the mover (3) from a further starting position (A) at a starting time point (tA) to a further target position (B) at a further target time point (tB), **in that** a further second maximum value (amax2, vmax2) of a second trajectory (t2) for said at least one movement quantity (x, v, a) of the mover (3) is determined, the further second trajectory (t2) describing a second movement to move the mover (3) from said further starting position (A) at said further starting time point (tA) to said further target position (B) at said further target time point (tB), **in that** the further first trajectory (t1) is selected as a further target trajectory (t*), if the further first maximum value (amax1, vmax1) is equal to or smaller than the second maximum value (amax2, vmax2), **or in that** the further second trajectory (t2) is selected as a further target trajectory (t*), if the second maximum value (amax2, vmax2) is smaller than the first maximum value (amax1, vmax1), **and in that,** starting at said further starting time point (tA), the mover (3), is moved in accordance with the further target trajectory (t*).

5. Method according to any one of the previous claims, **characterized in that** the at least one movement quantity (x, v, a) corresponds to a mover speed (v) and the first maximum value (amax1, vmax1) and the second maximum value (amax2, vmax2) correspond to a maximum speed (vmax), **or in that** the at least one movement quantity (x, v, a) corresponds to a mover acceleration (a) and the first maximum value (amax1, vmax1) and the second maximum value (amax2, vmax2) correspond to a maximum acceleration (amax), **or in that** the at least one movement quantity (x, v, a) corresponds to a mover jerk (j) and the first maximum value (amax1, vmax1) and the second maximum value (amax2, vmax2) correspond to a maximum jerk (jmax).

6. Method according to any one of the previous claims, **characterized in that** at least one limitation value (vlim, alim) is provided to limit the at least one movement quantity (x, v, a), **and in that** the at least one limitation value (vlim, alim) is taken into account during a planning process for planning the first and second trajectory (t1, t2) considered when selecting the target trajectory (t*).

7. Method according to any one of the previous claims, **characterized in that** a second limitation value (vlim2, alim2) different from the at least one limitation value (xlim, vlim, alim) is provided for a spatial section between the starting position (A) to the target position (B) to replace the at least one limitation value (xlim, vlim, alim) in said spatial section, **and in that** the second limitation value (xlim2, vlim2, alim2) is used for planning the second trajectory (t2).

8. Method according to any one of the previous claims, **characterized in that** an optimization method is used for selecting a trajectory as target trajectory (t*), the optimization method determining a plurality of maximum values (amax1, vmax1), each associated with a respective trajectory (t1, t2, ...) for said at least one movement quantity (x, v, a) of the mover (3), the optimization method preferably selected from a group comprising methods of pareto-optimization, methods of linear programming, methods of nonlinear optimization, methods based on artificial-intelligence or methods based on neural networks.

9. Method according to any one of the previous claims, **characterized in that** a processing station is provided at the target position (B), **and in that** a workload parameter of the processing station is taken into account for planning at least one of the trajectories considered when selecting the target trajectory (t*).

**10.** Method according to any one of the previous claims, **characterized in that** at least one further mover (3i+1) is moved towards the target position (B), **and in that** at least one value of a further movement quantity (x2, v2, a2) of the at least one further mover (3i+1) is taken into account for planning the trajectories (t1, t2) considered when selecting the target trajectory (t*).

**11.** Method according to claim 10, **characterized in that** the first trajectory (t1) and second trajectory (t2) are planned such that a pre-described buffer-distance (dmin) between the mover (3) and the at least on further mover is secured during operation of the electromagnetic transport device (1).

**12.** Method according to claim 10 or 11, **characterized in that** a traffic parameter representing a traffic situation in the electromagnetic transport device (1) is taken into account for planning the trajectories (t1, t2) considered for selecting the target trajectory (t*).

**13.** Method according to claim 12, **characterized in that** the traffic parameter is representative of an average speed of the movers (3i, 3i+1, 3i-1) moved in the electromagnetic transport device (1), **or in that** the traffic parameter is representative of an average distance between neighboring movers (3i, 3i+1, 3i-1) moved in the electromagnetic transport device (1) **or in that** the traffic parameter is representative of a minimum speed assumed by a mover (3) moved in the electromagnetic transport device (1) in a pre-described traffic-observation time interval.

**14.** Method according to any one of the previous claims, **characterized in that** a long stator linear motor is provided as the electromagnetic transport device (1) **or in that** a planar motors is provided as the electromagnetic transport device (1).

**15.** Electromagnetic transport device (1) with a stator (2) along which at least one mover (3) is moved and a control unit, **characterized in that** the control unit is designed to, at a pre-described planning time point (tP), determine a first maximum value (amax1, vmax1) of a first trajectory (t1) for at least one movement quantity (x, v, a) of the mover (3), the first trajectory (t1) being configured to move the mover (3) from a starting position (A) at a starting time point (tA) to a target position (B) at a target time point (tB), **and in that** the control unit is further designed to, at said planning time point (tP), determine a second maximum value (amax2, vmax2) of a second trajectory (t2) for said at least one movement quantity (x, v, a) of the mover (3), the second trajectory (t2) also being configured to move the mover (3) from said starting position (A) at said starting time point (tA) to said target position (B) at said target time point (tB), select the first trajectory (t1) as a target trajectory (t*), if the first maximum value (amax1, vmax1) is equal to or smaller than the second maximum value (amax2, vmax2), or select the second trajectory (t2) as a target trajectory (t*), if the second maximum value (amax2, vmax2) is smaller than the first maximum value (amax1, vmax1), and to, starting at said starting time point (tA), move the mover (3) in accordance with said target trajectory (t*).

Fig. 1

Fig. 2a

EP 4 635 779 A1

Fig. 2b

EP 4 635 779 A1

Fig. 3

EP 4 635 779 A1

Fig. 4a

Fig. 4b

Fig. 4c

Fig. 5

Fig. 6

Fig. 7a

Fig. 7b

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2017/225900 A1 (RADAK ALEXANDER [AT] ET AL) 10 August 2017 (2017-08-10)<br>* paragraphs [0003], [0026], [0034], [0041] *<br>* figures 1, 3 *<br>- - - - - | 1-15 | INV.<br>B60L13/03<br>B60L15/00<br>B61B13/08<br>B65G54/02<br>H02K41/03 |
| Y | EP 3 868 005 B1 (BECKHOFF AUTOMATION GMBH [DE]) 1 June 2022 (2022-06-01)<br>* paragraphs [0002], [0018], [0019] *<br>- - - - - | 1-15 | H02P25/06 |

TECHNICAL FIELDS
SEARCHED      (IPC)

B60L
B61K
B61B
B65G
H02K
H02P

The present search report has been drawn up for all claims

| Place of search | Date of completion of the search | Examiner |
|---|---|---|
| The Hague | 24 October 2024 | Wirth, Sebastian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 17 0545

24-10-2024

| Patent document cited in search report | Publication date | Patent family member(s) | | Publication date |
|---|---|---|---|---|
| US 2017225900 A1 | 10-08-2017 | AT | 518353 A1 | 15-09-2017 |
| | | CA | 2956860 A1 | 05-08-2017 |
| | | EP | 3202611 A1 | 09-08-2017 |
| | | US | 2017225900 A1 | 10-08-2017 |
| EP 3868005 B1 | 01-06-2022 | CA | 3121028 A1 | 04-06-2020 |
| | | CN | 113169632 A | 23-07-2021 |
| | | CN | 117118186 A | 24-11-2023 |
| | | DE | 102018129739 A1 | 28-05-2020 |
| | | EP | 3868005 A1 | 25-08-2021 |
| | | US | 2021281203 A1 | 09-09-2021 |
| | | WO | 2020109276 A1 | 04-06-2020 |

EPO FORM P0459

For more details about this annex : see Official Journal of the European Patent Office, No. 12/82

## REFERENCES CITED IN THE DESCRIPTION

**Patent documents cited in the description**

- US 6876107 B2
- US 9202719 B2
- WO 2013143783 A1
- WO 9850760 A2
- US 20130074724 A1
- WO 2004103792 A1
- EP 1270311 B1
- EP 3868005 B1

**Non-patent literature cited in the description**

- **KARUR, K.** ; **SHARMA, N.** ; **DHARMATTI, C.** ; **SIEGEL, J.E.** A Survey of Path Planning Algorithms for Mobile Robots. *Vehicles*, 2021, vol. 3, 448-468, https://doi.org/10.3390/vehicles3030027
- **GASPARETTO, ALESSANDRO et al.** Path planning and trajectory planning algorithms: A general overview.. *Motion and Operation Planning of Robotic Systems: Background and Practical Approaches*, 2015, 3-27